# EUROPEAN PATENT SPECIFICATION

(11) **EP 1 964 600 B1**
(45) Date of publication and mention of the grant of the patent: **11.12.2013**
(21) Application number: 07254248.3
(22) Date of filing: 26.10.2007
(51) Int. Cl.: B01D 29/21, B01D 29/90

(54) **Filter cartridge with inlet flow diffuser**
Filterkartusche mit Einströmungsdiffusor
Cartouche de filtre avec diffuseur du fluide entrant

(30) Priority: 26.10.2006 US 863101 P
(43) Date of publication of application: 03.09.2008
(73) Proprietor: PTI Technologies, Inc., Oxnard, CA 93030 (US)
(72) Inventor: SANFORD, Michael S, Oxnard, CA 93030 (US); SURI, Kanwar, Northridge, CA 91326 (US); GAO, Michael L, Oxnard, CA 93030 (US); ELLIS, Rowland, Ventura, CA 93001 (US)
(74) Representative: Pluckrose, Anthony William

(56) References cited:
- EP-A- 1 015 092
- WO-A-2005/044420
- DE-U1- 20 213 512
- US-A- 4 064 938
- US-A- 5 980 745

## Description

### BACKGROUND

The present application relates to fluid filters, and particularly to fluid filters that are subjected to impinging fluid flow on the filter medium. The invention is broadly applicable and can be used in hydraulic, fuel and air filter applications.

Fluid filters are commonly used to prevent contaminants, especially particles, in the fluid from passing through the filter to downstream components. Fluid filters have many different constructions, but often include a support material in addition to the actual filter media. In addition, the filter media is usually part of a filter cartridge. The cartridge either acts as, or is designed to fit within, a chamber. The chamber and filter media are configured such that fluid entering the chamber must pass through the filter media before it exits the chamber.

In one application, fluid enters the chamber from a pump which increases the fluid's pressure for downstream applications. The filter cartridge is generally cylindrical. After leaving the pump, fluid flows into the filter chamber and enters from the outside of the filter, through the media, into a central chamber, which is connected to the outlet of the chamber. It was discovered that the cartridge was failing during use, and the area of failure was the end caps of the cartridge that connected to the filter chamber. It was believed that the fluid from the pump was impinging on the filter cartridge in a tangential manner, causing the cartridge to spin on its mountings. The spinning action caused wear on the fittings on the end caps of the filter, causing them to fail. Thus the fittings were strengthened, and it was decided to add features to the cartridge that would prevent it from spinning inside the chamber.

This fix prevented the fittings on the end caps from wearing and failing. However, it was later discovered that the filter media was failing, thereby allowing contaminants to pass through the filter. Since the filter media had not been altered when the cartridge was changed to add the anti-rotation feature, it was unclear why the filter media was found to be failing. Several different approaches were considered to solve the problem, including using stainless steel wire to help support the filter media, and an outer guard tube with many holes through it. Also, changes were considered for the filtration media and pleat design. However, these initial approaches did not seem to solve the problem. Thus, there is a need for a filter cartridge that can be used in the chamber that will adequately filter the fluid without the media failing. Also, the cost and weight of the cartridge need to be kept at a minimum.

US 5,980,745 describes a woven wire mesh filter over a supporting body formed of a perforated metal tube, and surrounded by an outer perforated jacket. WO 2005/044420 describes a filter with a centre support tube, a pleated filter media around it and an outer tubular diffuser member.

### BRIEF SUMMARY OF THE INVENTION

The present inventors discovered that the cause of the filter media failing was due to the fact that the filter cartridge was positioned in the chamber such that the fluid flow from the pump was impinging directly on the filter media. When the filter cartridge was free to rotate, the force from this impinging flow was dissipated by the rotation of the cartridge in the chamber. However, when the rotation was prevented, the impinging flow rate and force were so great that they caused the filter media and its supporting material to be disrupted.

A filter cartridge has been invented which overcomes the problem. The filter cartridge is constructed with a guard that has multiple inlets into the cartridge, maintaining sufficient open area for the fluid to pass through, but the openings are shaped to prevent the fluid from impinging directly on the filter media.

In a first aspect, the invention provides a filter cartridge as set out in claim 1. The filter cartridge comprises filter media and a housing surrounding the media. The housing has an outlet and is sealed such that all fluid flow out of the outlet must first enter the cartridge and pass through the media. The housing has multiple inlet flow paths configured so that fluid impinging on the housing is diffused as it enters the cartridge and is prevented from flowing directly towards the filter media.

In a second aspect, the invention provides a combination of a filter cartridge and a chamber containing the filter cartridge as set out in claim 14. The chamber has an inlet and an outlet and being sized to house the cartridge. The inlet and cartridge are positioned with respect to each other such that flow through the inlet into the chamber directly impinges on the cartridge. The cartridge comprises filter media and a housing surrounding the media. The housing has an outlet connected to the chamber outlet and is sealed such that all fluid flow out of the chamber must first enter the cartridge and pass through the media. The housing has multiple inlet flow paths configured so that fluid impinging on the housing is diffused as it enters the cartridge and is prevented from impinging directly on the filter media.

A third aspect of the invention is a method of filter fluid as set out in claim 18. This comprises forcing fluid through an inlet into a chamber containing a filter cartridge, the fluid flowing through the inlet and impinging directly on the filter cartridge; passing the fluid into the cartridge through multiple inlet flow paths configured so that fluid impinging on the housing is diffused as it enters the cartridge; filtering the fluid through filter media inside the cartridge; and passing filtered fluid out of the cartridge through a cartridge outlet in fluid communication with a chamber outlet.

With one embodiment, the filter media is a pleated structure inside of a tubular guard made of material that has louvered openings. This guard redirects the flow so that it has to follow a tortuous path to enter the filter cartridge, thus preventing direct impingement of the fluid on the filter media. While the filter cartridge of the present invention was developed to be placed within a chamber where there is direct impingement of fluid flow on the filtration media, the invention is also applicable to filters that are incorporated into manifolds, where direct impingement of the filtered fluid on the media could cause failure of the media.

These and other advantages of the invention, as well as the invention itself, will be more easily understood in view of the attached drawings.

### BRIEF DESCRIPTION OF THE DRAWINGS

Figure 1 is a perspective view of a first embodiment of a filter cartridge of the present invention.

Figure 2 is an exploded view of the filter cartridge of Figure 1.

Figure 3 is a cross-sectional view taken along line 3-3 of Figure 1.

Figure 4 is a cross-sectional view taken along line 4-4 of Figure 1.

Figure 5 is a perspective view of the inside of a chamber into which the filter cartridge of Figure 1 may be placed.

Figure 6 is a cross-sectional view of the filter cartridge of Figure 1 inside the chamber of Figure 5.

Figure 7 is an exploded view of chamber of Figure 5, showing the elements that are used to hold the filter cartridge inside the chamber.

Figure 8 is perspective view of a second embodiment of a filter cartridge of the present invention.

Figure 9 is a partial cross sectional view like Figure 6 but with the filter cartridge of Figure 8 in the chamber.

### DETAILED DESCRIPTION OF THE DRAWINGS AND THE PRESENTLY PREFERRED EMBODIMENTS

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

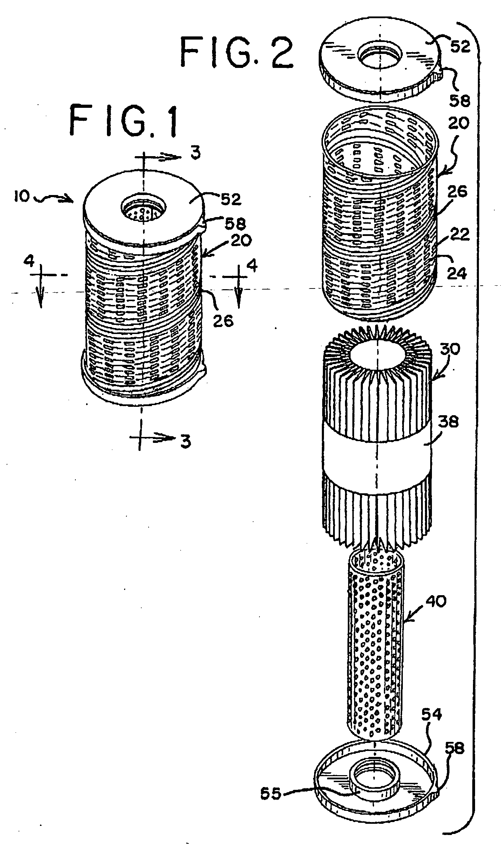

The preferred filter cartridge 10 of Figure 1 will be described in conjunction with its use on a jet engine fuel pump assembly. However, as noted above, the invention is applicable to other fluids besides jet fuel, and to other applications.

The filter cartridge 10 has five main components: a center support tube 40, pleated filter media 30, a housing surrounding the media formed from a generally tubular diffuser member 20, and two end caps 52 and 54. As shown in Figure 2, the preferred cartridge also includes a band 38 of fluid permeable material around the central section of the filter media, holding the filter media from contacting the tubular diffuser member.

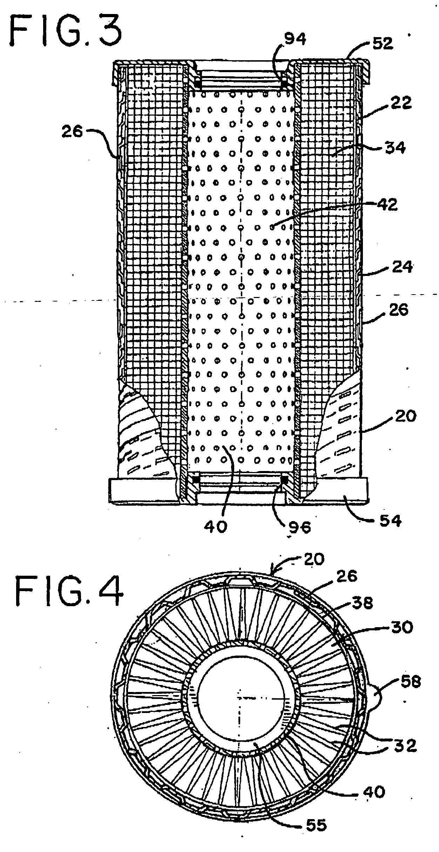

The filter media 30 is preferably a multi-layer material. In the preferred embodiment, the media composition includes glass fibers and binder formed into a layer, and supported by a support layer of spun bond thermoplastic fibers. A metallic wire screen 34, best seen in Figure 3, is placed on the outside of the media, which faces incoming fluid. As shown in Figure 4, the media is folded with pleats 32 into a generally cylindrical body surrounding the center support tube 40, with the folds extending outwardly from the center support tube. The center support tube has flow openings 42 into a central portion of the tube, and an outlet formed in each end of the tube, connecting to outlets formed in the center of each of end caps 52 and 54, which thus form the outlets of the housing. When the cartridge is in use, one of these outlets will be active and one will be sealed, as discussed below. A seating guide 55 is provided on each end cap. The seating guide serves three functions. Its outside diameter is used to locate and seat the inside of center support tube 40. Its inside diameter include a groove to hold an O-ring. Its height cooperates with the outer lip on the end cap to provide a well to hold a sealing compound used to seal the pieces of the cartridge together.

The end caps 52 and 54 are sealed to the tubular diffuser member 20 such that all fluid flow out of the outlet must first enter the cartridge and pass through the media. The tubular diffuser member 20 has multiple inlet flow paths configured so that fluid impinging on the housing is diffused as it enters the cartridge and is prevented from flowing directly towards the filter media. In the preferred embodiment, the diffuser member 20 is made from a strip of stamped louvered material formed into a tube shape using a spiral winding technique. A seam 26 is used to hold the spiral sections in place.

As noted above, the outer tubular diffuser member 20 surrounds the pleated filter media 30 and provides non-direct flow openings from outside the cartridge to the filter media. The non-direct flow openings are provided by openings stamped in the material making up the diffuser member. The louvered openings comprise a plurality of stamped tabs 22 extending inwardly and toward end cap 52, and a plurality of stamped tabs 24 extending inwardly and toward end cap 54. As best seen in Figures 1 and 2, the louvers are arranged so as to form alternating columns of oppositely directed louvers. In the preferred cartridge, the non-direct flow openings in the diffuser member provide at least about 25% open area, and more preferably about 40% open area. The amount of open area should be sufficient that there is not a significant pressure drop across the diffuser member.

The fluid permeable band 38 around the central section of the pleated filter media holds the pleated material to a smaller diameter than the inner diameter of the tubular diffuser member, thereby assuring a gap between the extremities of the pleats of the filter media and the tubular diffuser member to further diffuse fluid flow. This also prevents the edges of the pleats from coming into contact with the tabs 22 and 24 which form the louvered openings. Because the filter cartridge 10 is subject to mechanical vibrations found in the application, such contact could cause the tabs to rub against the filter media, causing holes to develop in the media.

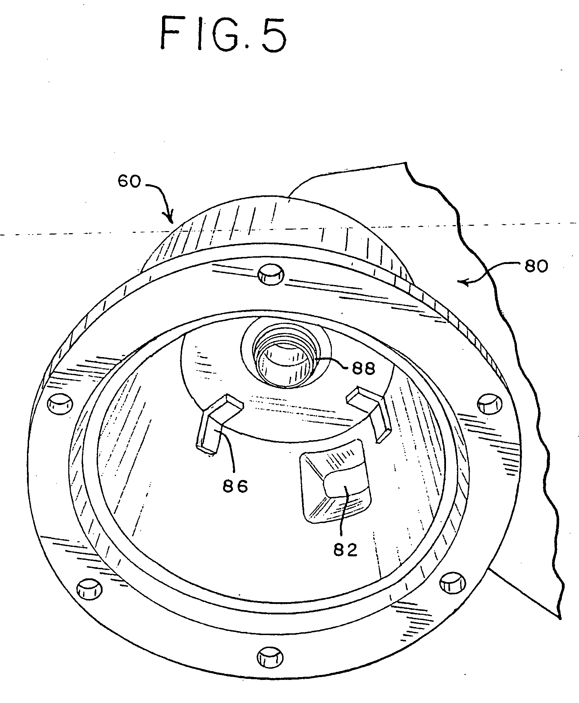

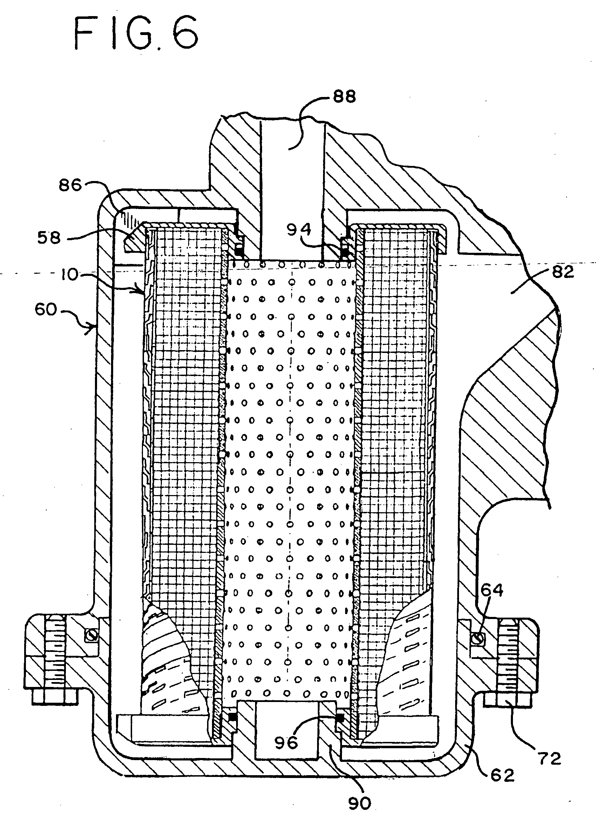

Figure 5 shows the chamber 60 into which the cartridge 10 is placed during use. The chamber 60 is sized to house the cartridge 10, and has an inlet 82 and an outlet 88. As seen in Figure 6, the inlet 82 and cartridge 10 are positioned with respect to each other such that flow through the inlet 82 into the chamber 60 directly impinges on the cartridge 10. The filter cartridge housing outlet is connected to the chamber outlet 88 and is sealed by an O-ring such that all fluid flow out of the chamber must first enter the cartridge and pass through the media

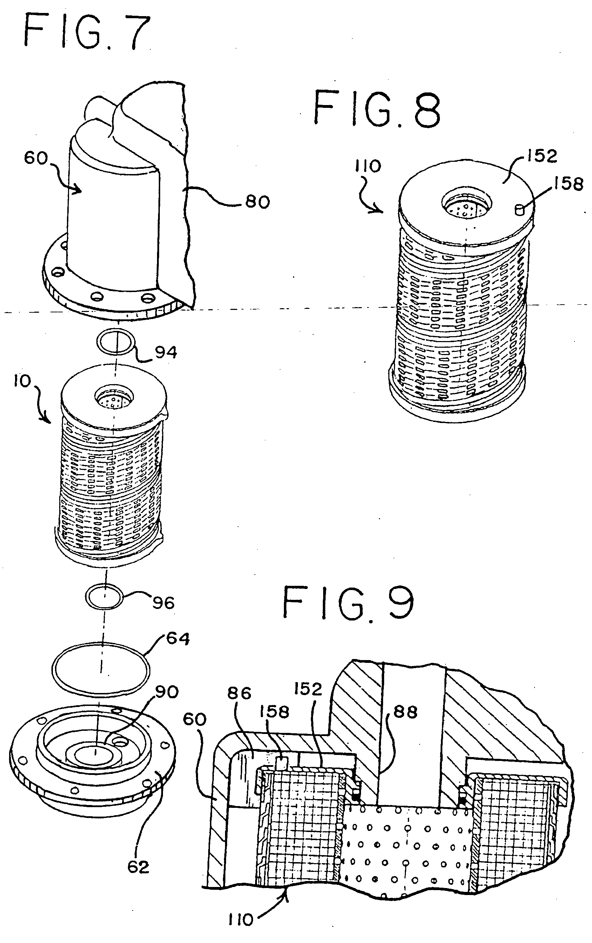

The chamber includes a number of internal ribs 86. An extension element is formed on the end cap 52 and is configured to interfere with internal rib 86 to prevent the cartridge from spinning inside the chamber due to impingement of fluid on the cartridge from the chamber inlet by interference between the rib and the extension element. In the cartridge 10, the extension element comprises a radially extending tab 58. In an alternate embodiment, shown in Figures 8 and 9, the cartridge 110 has an axially extending pin 158 formed on end cap 152 that is configured to interfere with internal rib 86, as seen in Figure 9. While only one end cap needs to have the extension member, as shown in Figure 1, both end caps 52 and 54 can include tabs 58 so that the cartridge can be inserted into the chamber either end first.

The chamber 60 is sealed by a cap 62 and O-ring 64, best seen in Figures 6 and 7. O-rings 94 and 96 are used to seal the cartridge 10 inside the chamber 60 when the cap 62 is tightened down by bolts 72. Base 90 acts to seal the opening in end cap 54, thus closing off that outlet from the housing. Of course, the filter cartridge can be inserted so that the opening out of end cap 54 is connected to the chamber outlet 88, in which case base 90 would seal the outlet out of end cap 52.

During use, fluid is forced by the pump 80 through the inlet 82 into the chamber 60 containing the filter cartridge 10. The fluid flows through the inlet and impinges directly on the filter cartridge. The fluid passes into the cartridge through multiple inlet flow paths configured so that fluid impinging on the housing is diffused as it enters the cartridge. The fluid is filtered as it passes through filter media 30 inside the cartridge 10. The filtered fluid then passes out of the cartridge through the cartridge outlet, which is in fluid communication with a chamber outlet 88.

The preferred media pack assembly consists of four or more layers of porous material. The outer layer, a corrosion resistant steel (CRES) mesh, is for protection during handling. The second layer is the actual filter media that provides the filtration efficiency and retained dirt capacity. It consists of a resin impregnated micro-fiberglass matrix. The third layer provides flow distribution and is used to support the media. All additional layers are to further support the media pack as needed. These layers are pleated, formed into a cylinder to maximize the filter area then side sealed with epoxy. The preferred diffuser member is louvered pattern with 0.76mm (0.030 inch) louvered minimum openings. It has a flush, spiral lock seam. The material is made of aluminium sheet stock, which should be anodized for aviation fluid applications. It could also be made from passivated stainless steel sheet. The preferred permeable fluid band is a polymeric spunbond material. The preferred gap between the media pack outer diameter and the insider diameter of the diffuser member is at least 1.5mm (1/16 inch). The center support tube and end caps are preferably made from anodized aluminium, but could also be made from passivated stainless steel. The filter media and center support tube are sealed into the end caps, and the end caps are sealed to the diffuser member, using epoxy.

The preferred embodiment of the invention provides a filter cartridge that prevents direct impingement of the high velocity fluid on the filter media. The louvered openings, and the gap between the diffuser member and the pleats, helps to assure that the fluid does not hit directly onto the media. The earlier ideas that were tried and did not work had either a wire mesh, or small holes in a tubular guard, but these did not redirect the flow. To the extent that the small holes would have caused the flow to be slowed down, they would have to have been so small that they would have restricted the open area and had a significant pressure drop across the guard. The preferred diffuser redirects the flow without causing a significant increase in pressure drop.

It should be understood that various changes and modifications to the presently preferred embodiments described herein will be apparent to those skilled in the art. For example, instead of using a louvered material for the diffuser member, a protective outer tube with solid areas strategically placed in line with direct flow impingement, but perforations in other areas, could also be used. Such a protective outer tube would still provide multiple inlet flow paths configured so that fluid impinging on the housing is diffused as it enters the cartridge and is prevented from impinging directly on the filter media. Such changes and modifications can be made without departing from the scope of the present invention and without diminishing its intended advantages. It is therefore intended that such changes and modifications be covered by the appended claims.

## Claims

1. A filter cartridge (10, 110) comprising:
a) filter media (30); and
b) a housing (20) surrounding the media (30), the housing (20) having a length and an outlet, the housing (20) having multiple inlet flow paths configured so that fluid impinging on the housing (20) is diffused as it enters the cartridge (10, 110) and is prevented from flowing directly towards the filter media (30), the multiple inlet flow paths being spaced along the length of the housing (20);
wherein the housing (20) is sealed such that all fluid flow out of the outlet must first enter the cartridge (10, 110) and pass through the media (30);
the filter media comprises a pleated material (30); and
the filter media (30) is held from contacting the housing (20), thereby assuring a gap between the extremities of the pleats (32) of the filter media (30) and the housing (20) to further diffuse fluid flow.

2. The filter cartridge (10, 110) of claim 1 wherein the housing comprises a generally tubular diffuser member (20) and two end caps (52, 54).

3. The filter cartridge (10, 110) of claim 2 wherein the generally tubular diffuser member (20) comprises louvered openings.

4. The filter cartridge (10, 110) of claim 3 wherein the louvered openings comprise a plurality of stamped tabs (22) extending inwardly and towards a first end of the cartridge and a plurality of stamped tabs (24) extending inwardly and toward a second end of the cartridge opposite the first end.

5. The filter cartridge (10, 110) of any one of claims 2 to 4 wherein the diffuser member comprises a strip of stamped louvered material formed into a tube shape.

6. The filter cartridge (10, 110) of any one of claims 2 to 5 wherein at least one of the end caps (52, 54) comprises an extension element configured to interfere with internal structure of a chamber (60) to prevent the cartridge (10, 110) from spinning inside the chamber (60).

7. The filter cartridge (10, 110) of any one of claims 1 to 6 wherein the filter media (30) comprises a multilayer material.

8. The filter cartridge (10, 110) of any one of claims 1 to 7 wherein the filter media (30) comprises a composition including glass fibers and binder formed into a layer and supported by a support layer of spun bond thermoplastic fibers and metallic wire screen (34).

9. The filter cartridge (10, 110) of claim 2 further comprising a center support tube (40) having flow openings (42) into a central portion thereof and an outlet there from wherein the pleated filter media (30) is arranged in folds extending outwardly from the center support tube (40); and wherein the outer tubular diffuser member (20) provides permanently open, non-direct flow openings from outside the cartridge (10, 110) to the filter media (30).

10. The filter cartridge (10, 110) of claim 9 wherein the non-direct flow openings are provided by openings stamped in the material making up the diffuser member (20) such that the openings include louvers.

11. The filter cartridge (10, 110) of claim 10 wherein the louvers comprise alternating columns of oppositely directed louvers.

12. The filter cartridge (10, 110) of any one of claims 9 to 11 wherein the non-direct flow openings in the diffuser member (20) provide at least about 25% open area.

13. The filter cartridge (10, 110) of any one of claims 1 to 12 wherein a fluid permeable band (38) around a central section of the pleated filter media (30) holds the pleated material to a smaller diameter than the inner diameter of the housing (20).

14. A combination of the filter cartridge (10, 110) of any one of claims 1 to 13 and a chamber (60) containing the filter cartridge (10, 110), wherein the filter cartridge is cylindrical and made with pleated filter media (30); and the chamber (60) has an inlet (82) and an outlet (88) and is sized to house the cartridge (10, 110), the inlet (82) and cartridge (10, 110) being positioned with respect to each other such that flow through the inlet (82) into the chamber (60) directly impinges on a circumferential surface of the cartridge (10, 110), the housing outlet being connected to the chamber outlet (88) and being sealed such that all fluid flow out of the chamber (60) must first enter the cartridge (10, 110) and pass through the media (30).

15. The combination of claim 14 wherein the chamber (60) includes at least one internal rib (86) and the cartridge (10, 110) contains at least one extension element, the extension element and rib (86) being configured such that the cartridge (10, 110) is prevented from spinning inside the chamber (60) due to impingement of fluid on the cartridge (10, 110) from the chamber inlet (82) by interference between the rib (86) and the extension element.

16. The combination of claim 15 wherein the extension element comprises a radially extending tab (58).

17. The combination of claim 15 wherein the extension element comprises an axially extending pin (158).

18. A method of filtering fluid comprising:
a) forcing fluid through an inlet (82) into a chamber (60) containing a cylindrical filter cartridge (10, 110) comprising a housing (20) having a length, the fluid flowing through the inlet (82) and impinging directly on a circumferential surface of the housing (20);
b) passing the fluid into the cartridge (10, 110) through multiple inlet flow paths configured so that fluid impinging on the housing (20) is diffused as it enters the cartridge (10, 110), the multiple inlet flow paths being spaced along the length of the housing (20);
c) filtering the fluid through pleated filter media (30) inside the cartridge (10, 110), wherein the filter media (30) is held from contacting the housing (20), thereby assuring a gap between the extremities of the pleats of the filter media (30) and the housing (20) to further diffuse fluid flow; and
d) passing filtered fluid out of the cartridge (10, 110) through a cartridge outlet in fluid communication with a chamber outlet (88).

19. The method of claim 18 wherein the fluid comprises jet fuel.

20. The method of any one of claims 18 to 19 wherein the fluid is forced into the chamber (60) by a fuel pump (80).

21. The filter cartridge (10, 110) of claim 5 wherein the louvered material is formed into a tube shape using a spiral winding technique.

## Patentansprüche

1. Filterkartusche (10, 110), die folgendes umfasst:
a) ein Filtermedium (30); und
b) ein Gehäuse (20), das das Medium (30) umgibt, wobei das Gehäuse (20) eine Länge und einen Auslass aufweist, wobei das Gehäuse (20) mehrere Einlass-Strömungswege aufweist, die so ausgestaltet sind, dass ein Fluid, das das Gehäuse (20) beaufschlägt, diffundiert wird, sobald es in die Kartusche (10, 110) eintritt, und daran gehindert wird, direkt auf das Filtermedium (30) zuzuströmen, wobei die mehreren Einlass-Strömungswege mit Abstand entlang der Länge des Gehäuses (20) angeordnet sind;
wobei das Gehäuse (20) abgedichtet ist, so dass der gesamte Fluidstrom aus dem Auslass zuerst in die Kartusche (10, 110) eintreten und das Medium (30) durchströmen muss;
das Filtermedium ein Faltmaterial (30) umfasst; und
das Filtermedium (30) davon abgehalten wird, das Gehäuse (20) zu berühren, wodurch ein Spalt zwischen den äußersten Enden der Falten (32) des Filtermediums (30) und des Gehäuses (20) zum weiteren Diffundieren des Fluidstroms sichergestellt wird.

2. Filterkartusche (10, 110) nach Anspruch 1, wobei das Gehäuse ein im Allgemeinen schlauchförmiges Diffusorelement (20) und zwei Abschlusskappen (52, 54)umfasst.

3. Filterkartusche (10, 110) nach Anspruch 2, wobei das im Allgemeinen schlauchförmige Diffusorelement (20) Lamellenöffnungen umfasst.

4. Filterkartusche (10, 110) nach Anspruch 3, wobei die Lamellenöffnungen eine Vielzahl von gestanzten Streifen (22) umfassen, die sich nach innen und hin zu einem ersten Ende der Kartusche erstrecken, und eine Vielzahl von gestanzten Streifen (24), die sich nach innen und hin zu einem zweiten Ende der Kartusche, gegenüber dem ersten Ende, erstrecken.

5. Filterkartusche (10, 110) nach einem der Ansprüche 2 bis 4, wobei das Diffusorelement einen Streifen aus gestanztem Lamellenmaterial, das eine Schlauchform bildet, umfasst.

6. Filterkartusche (10, 110) nach einem der Ansprüche 2 bis 5, wobei mindestens eine der Abschlusskappen (52, 54) ein Erstreckungselement umfasst, das dazu ausgestaltet ist, in die interne Struktur einer Kammer (60) einzugreifen, um zu verhindern, dass sich die Kartusche (10, 110) im Inneren der Kammer (60) dreht.

7. Filterkartusche (10, 110) nach einem der Ansprüche 1 bis 6, wobei das Filtermedium (30) ein mehrschichtiges Material umfasst.

8. Filterkartusche (10, 110) nach einem der Ansprüche 1 bis 7, wobei das Filtermedium (30) eine Zusammensetzung mit Glasfasern und Bindemittel umfasst, die zu einer Schicht geformt und von einer Tragschicht aus im Schmelzspinnverfahren hergestellten thermoplastischen Fasern und metallischem Drahtsieb (34) getragen wird.

9. Filterkartusche (10, 110) nach Anspruch 2, die des Weiteren ein zentrales Stützrohr (40) mit Strömungsöffnungen (42) in einen zentralen Abschnitt davon und einen Auslass von dort umfasst, wobei das Falt-Filtermedium (30) in Falten angeordnet ist, die sich nach außen von dem Zentrum des Tragrohrs (40) erstrecken; und wobei das äußere schlauchförmige Diffusorelement (20) permanent geöffnete, nicht-direkte Strömungsöffnungen von außerhalb der Kartusche (10, 110) zu dem Filtermedium (30) bereitstellt.

10. Filterkartusche (10, 110) nach Anspruch 9, wobei die nicht-direkten Strömungsöffnungen durch Öffnungen bereitgestellt sind, die in das Material, das das Diffusorelement (20) bildet, so eingestanzt sind, dass die Öffnungen Lamellen aufweisen.

11. Filterkartusche (10, 110) nach Anspruch 10, wobei die Lamellen sich abwechselnde Reihen entgegengesetzt ausgerichteter Lamellen umfassen.

12. Filterkartusche (10, 110) nach einem der Ansprüche 9 bis 11, wobei die nicht-direkten Strömungsöffnungen in dem Diffusorelement (20) mindestens ungefähr 25% offene Fläche bereitstellen.

13. Filterkartusche (10, 110) nach einem der Ansprüche 1 bis 12; wobei ein fiuid-durchlässiges Band (38) um einen zentralen Abschnitt des Falt-Filtermediums (30) das Faltmaterial auf kleinerem Durchmesser hält als der innere Durchmesser des Gehäuses (20).

14. Kombination aus der Filterkartusche (10, 110) nach einem der Ansprüche 1 bis 13 und einer Kammer (60), die die Filterkartusche (10, 110) enthält, wobei die Filterkartusche zylindrisch ist und aus einem Falt-Filtermedium (30) hergestellt ist; und wobei die Kammer (60) einen Einlass (82) und einen Auslass (88) aufweist und so bemessen ist, dass sie die Kartusche (10, 110) aufnimmt, wobei der Einlass (82) und die Kartusche (10, 110) in Bezug aufeinander so positioniert sind, dass ein Strom durch den Einlass (82) in die Kammer (60) direkt eine Umfangsfläche der Kartusche (10, 110) beaufschlägt, wobei der Gehäuseauslass mit dem Kammerauslass (88) verbunden und abgedichtet ist, so dass der gesamte Fluidstrom aus der Kammer (60) zuerst in die Kartusche (10, 110) eintreten und das Medium (30) durchströmen muss.

15. Kombination nach Anspruch 14, wobei die Kammer (60) mindestens eine interne Rippe (86) aufweist und die Kartusche (10, 110) mindestens ein Erstreckungselement enthält, wobei das Erstreckungselement und die Rippe (86) so ausgestaltet sind, dass die Kartusche (10, 110) daran gehindert wird, sich im inneren der Kammer (60) aufgrund einer Beaufschlagung der Kartusche (10, 110) mit Fluid von dem Kammereinlass (82) durch Einwirkung zwischen der Rippe (86) und dem Erstreckungselement zu drehen.

16. Kombination nach Anspruch 15, wobei das Erstreckungselement einen sich radial erstreckenden Streifen (58) umfasst.

17. Kombination nach Anspruch 15, wobei das Erstreckungselement einen sich axial erstreckenden Stift (158) umfasst.

18. Verfahren zum Filtern von Fluid, das folgendes umfasst:
a) Drücken von Fluid durch einen Einlass (82) in eine Kammer (60), die eine zylindrische Filterkartusche (10, 110) enthält, die ein Gehäuse (20) mit einer Länge umfasst, wobei das Fluid durch den Einlass (82) strömt und direkt eine Umfangsfläche des Gehäuses (20) beaufschlägt;
b) Leiten des Fluids in die Kartusche (10, 110) durch mehrere Einlass-Strömungswege, die dazu ausgestaltet sind, dass ein das Gehäuse (20) beaufschlagendes Fluid diffundiert wird, sobald es in die Kartusche (10, 110) eintritt, wobei die mehreren Einlass-Strömungswege mit Abstand entlang der Länge des Gehäuses (20) angeordnet sind;
c) Filtern des Fluids durch ein Falt-Filtermedium (30) im Inneren der Kartusche (10, 110), wobei das Filtermedium (30) davon abgehalten wird, das Gehäuse (20) zu berühren, wodurch ein Spalt zwischen den äußersten Enden der Falten des Filtermediums (30) und des Gehäuses (20) zum weiteren Diffundieren des Fluidstroms sichergestellt wird; und
d) Leiten von gefiltertem Fluid aus der Kartusche (10, 110) heraus durch einen Kartuschenauslass, der in Fluidverbindung mit einem Kammerauslass (88) steht.

19. Verfahren nach Anspruch 18, wobei das Fluid Kerosin umfasst.

20. Verfahren nach einem der Ansprüche 18 bis 19, wobei das Fluid von einer Kraftstoffpumpe (80) in die Kammer (60) gedrückt wird.

21. Filterkartusche (10, 110) nach Anspruch 5, wobei das Lamellenmaterial unter Verwendung eines Wellenwicklungsverfahrens in die Form eines Schlauchs gebracht wird.

## Revendications

1. Cartouche de filtre (10, 110) comprenant :
a) un support de filtre (30) ; et
b) un boîtier (20) entourant le support (30), le boîtier (20) ayant une longueur et une sortie, le boîtier (20) ayant de multiples chemins d'écoulement d'entrée configurés de telle sorte que le fluide incident sur le boîtier (20) est diffusé lorsqu'il entre dans la cartouche (10, 110) et est empêché de s'écouler directement vers le support de filtre (30), les multiples chemins d'écoulement d'entrée étant espacés sur la longueur du boîtier (20) ;
où le boîtier (20) est scellé de telle sorte que l'ensemble du fluide s'écoulant de la sortie doit d'abord entrer dans la cartouche (10, 110) et passer à travers le support (30) ;
le support de filtre comprend un matériau plaqué (30) ; et
le support de filtre (30) est empêché de venir en contact avec le boîtier (20), en assurant ainsi un espace entre les extrémités des plis (32) du support de filtre (30) et le boîtier (20) afin de diffuser encore l'écoulement de fluide.

2. Cartouche de filtre (10, 110) selon la revendication 1, dans laquelle le boîtier comprend un élément diffuseur généralement tubulaire (20) et deux capuchons d'extrémité (52, 54).

3. Cartouche de filtre (10, 110) selon la revendication 2, dans laquelle l'élément diffuseur généralement tubulaire (20) comprend des ouvertures à canaux de ventilation.

4. Cartouche de filtre (10, 110) selon la revendication 3, dans laquelle les ouvertures à canaux de ventilation comprennent une pluralité de pattes estampées (22) s'étendant vers l'intérieur et vers une première extrémité de la cartouche, et une pluralité de pattes estampées (24) s'étendant vers l'intérieur et vers une seconde extrémité de la cartouche opposée à la première extrémité.

5. Cartouche de filtre (10, 110) selon l'une quelconque des revendications 2 à 4, dans laquelle l'élément diffuseur comprend une bande de matériau estampé à canaux de ventilation configurée en une forme de tube.

6. Cartouche de filtre (10, 110) selon l'une quelconque des revendications 2 à 5, dans laquelle au moins un des capuchons d'extrémité (52, 54) comprend un élément d'extension configuré pour interférer avec la structure interne d'une chambre (60) pour empêcher la cartouche (10, 110) de tourner à l'intérieur de la chambre (60).

7. Cartouche de filtre (10, 110) selon l'une quelconque des revendications 1 à 6, dans laquelle le support de filtre (30) comprend un matériau multicouche.

8. Cartouche de filtre (10, 110) selon l'une quelconque des revendications 1 à 7, dans laquelle le support de filtre (30) comprend une composition incluant des fibres de verre et un liant formée en une couche et supportée par une couche de support de fibres thermoplastiques non tissées et un écran de fil métallique (34).

9. Cartouche de filtre (10, 110) selon la revendication 2, comprenant en outre un tube de support central (40) ayant des ouvertures d'écoulement (42) dans une portion centrale de celui-ci et une sortie de celui-ci, où le support de filtre plissé (30) est agencé en plis s'étendant vers l'extérieur depuis le tube de support central (40) ; et où l'élément diffuseur tubulaire extérieure (20) réalisé des ouvertures d'écoulement non directes, ouvertes en permanence, depuis l'extérieur de la cartouche (10, 110) au support de filtre (30).

10. Cartouche de filtre (10, 110) selon la revendication 9, dans lequel les ouvertures d'écoulement non directes sont réalisées par des ouvertures estampées dans le matériau constituant l'élément diffuseur (20) de sorte que les ouvertures incluent des canaux à ventilation.

11. Cartouche de filtre (10, 110) selon la revendication 10, dans laquelle les canaux de ventilation comprennent des colonnes alternantes de canaux à ventilation dirigés d'une manière opposée.

12. Cartouche de filtre (10, 110) selon l'une quelconque des revendications 9 à 11, dans laquelle les ouvertures d'écoulement non directes dans l'élément diffuseur (20) représentent au moins environ 25 % d'aire ouverte.

13. Cartouche de filtre (10, 110) selon l'une quelconque des revendications 1 à 12, dans laquelle une bande perméable au fluide (38) autour d'une section centrale du support de filtre plissé (30) maintient le matériau plissé en un diamètre plus petit que le diamètre intérieur du boîtier (20).

14. Combinaison d'une cartouche de filtre (10, 110) selon l'une quelconque des revendications 1 à 13 et une chambre (60) contenant la cartouche de filtre (10, 110), où la cartouche de filtre est cylindrique et est réalisée avec un support de filtre plissé (30) ; et la chambre (60) possède une entrée (82) et une sortie (88) et est dimensionnée pour loger la cartouche (10, 110), l'entrée (82) et la cartouche (10, 110) étant positionnées l'une par rapport à l'autre de telle sorte que l'écoulement à travers l'entrée (82) dans la chambre (60) heurte directement une surface circonférentielle de la cartouche (10, 110), la sortie de boîtier étant reliée à la sortie de chambre (88) et étant scellée de telle sorte que l'ensemble de l'écoulement du fluide hors de la chambre (60) doit d'abord entrer dans la cartouche (10, 110) et passer à travers le support (30).

15. Combinaison selon la revendication 14, dans laquelle la chambre (60) inclut au moins une nervure interne (86), et la cartouche (10, 110) contient au moins un élément d'extension, l'élément d'extension et la nervure (86) étant configurés de telle sorte que la cartouche (10, 110) est empêchée de tourner à l'intérieur de la chambre (60) par suite de l'incidence du fluide sur la cartouche (10, 110) depuis l'entrée de chambre (82) par l'interférence entre la nervure (96) et l'élément d'extension.

16. Combinaison selon la revendication 15, dans laquelle l'élément d'extension comprend une patte s'étendant radialement (58).

17. Combinaison selon la revendication 15, dans laquelle l'élément d'extension comprend un axe s'étendant axialement (158).

18. Procédé pour filtrer un fluide, comprenant :
a) forcer le fluide à travers une entrée (82) dans une chambre (60) contenant une cartouche de filtre cylindrique (10, 110) comprenant un boîtier (20) ayant une longueur, le fluide s'écoulant à travers l'entrée (82) et heurtant directement une surface circonférentielle du boîtier (20) ;
b) faire passer le fluide dans la cartouche (10, 110) à travers des chemins d'écoulement multiples de telle sorte que le fluide heurtant le boîtier (20) est diffusé lorsqu'il entre dans la cartouche (10, 110), les chemins d'écoulement d'entrée multiples étant espacés sur la longueur du boîtier (20) ;
c) filtrer le fluide à travers un support de filtre plissé (30) à l'intérieur de la cartouche (10, 110), où le support de filtre (30) est empêché de venir en contact avec le boîtier (20), en assurant ainsi un espace entre les extrémités des plis du support de filtre (30) et le boîtier (20) pour diffuser encore l'écoulement de fluide ; et
d) faire passer le fluide filtré hors de la cartouche (10, 110) à travers une sortie de cartouche en communication fluidique avec une sortie de chambre (88).

19. Procédé selon la revendication 18, dans lequel le fluide comprend le kérosène.

20. Procédé selon l'une quelconque des revendications 18 à 19, dans lequel le fluide est forcé dans la chambre (60) par une pompe à combustible (80).

21. Cartouche de filtre (10, 110) selon la revendication 5, dans lequel le matériau à canaux de ventilation est configuré en une forme de tube en utilisant une technique d'enroulement en spirale.
